# EUROPÄISCHE PATENTSCHRIFT

(11) **EP 0 973 209 B1**
(45) Veröffentlichungstag und Bekanntmachung des Hinweises auf die Patenterteilung: **30.07.2003**
(21) Anmeldenummer: 99112320.9
(22) Anmeldetag: 26.06.1999
(51) Int. Cl.: H01L 41/09

(54) **Stellvorrichtung**
Actuator
Actionneur

(30) Priorität: 15.07.1998 DE 19831744
(43) Veröffentlichungstag der Anmeldung: 19.01.2000
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Scheibl, Lothar, 52064 Aachen (DE); Hof, Albrecht, 73430 Aalen (DE)

(56) Entgegenhaltungen:
- EP-A- 0 262 408
- DE-A- 3 812 684
- US-A- 4 723 086
- PATENT ABSTRACTS OF JAPAN vol. 012, no. 415 (P-781), 4. November 1988 (1988-11-04) & JP 63 153405 A (OLYMPUS OPTICAL CO LTD), 25. Juni 1988 (1988-06-25)

## Beschreibung

Die Erfindung betrifft eine Stellvorrichtung mit einem Getriebe nach der im Oberbegriff von Anspruch 1 näher definierten Art.

Die DE 195 16 643 C1 beschreibt ein Härteprüfgerät mit einem ausfahrenden Stößel, an dessen Spitze eine Kraftmess-Einrichtung angeordnet ist. Der Stößel kann durch eine Kombination mit einer Spindel und einem Piezosteller zweistufig bewegt werden. Dabei wird die Verschiebebewegung über eine Spindelmutter und einer in der Vorrichtung integrierten Längsführung ausgekoppelt. Der Bewegung der Spindelmutter wird eine Bewegung des Piezostellers überlagert, indem dieser z.B. koaxial mit der Spindelmutter gekoppelt wird. Bei dieser Vorrichtung ist nur der Gesamthub messbar, wobei die Bezugsfläche nicht klar ist. Eine Messung einer Differenzbewegung des Piezostellers gegenüber der Spindelmutter ist nicht vorgesehen. Da Piezoelemente mit Hysterese arbeiten, kann deshalb der Auslenkungszustand des Piezostellers nicht genau angegeben werden, insbesondere wenn damit eine Feinverstellung in einem Bewegungsbereich von z.B. 100 µ vorgesehen ist. Eine Stellbewegung erfolgt nur in axialer Richtung. Da die Einrichtung in einer Meßspitze für axiale Reaktionskräfte endet, müssen keine Querkräfte, die aus Verkippungen der angetasteten Fläche entstehen können, aufgenommen werden. Darüber hinaus sind bei der vorbekannten Vorrichtung keine wechselnden Bewegungsrichtungen vorgesehen.

Die JP 8 31 37 85 A zeigt einen Mikroskop-Fokussiertrieb mit einem konventionellen Zahnstangentrieb und einem nachgeschalteten Piezoelement.

Der vorliegenden Erfindung liegt demgegenüber die Aufgabe zugrunde, eine Stellvorrichtung der eingangs erwähnten Art zu schaffen, die mit hoher Genauigkeit funktioniert und zwar auch dann, wenn mit Verkippungen gerechnet werden muß.

Erfindungsgemäß wird diese Aufgabe durch die im kennzeichnenden Teil von Anspruch 1 genannten Merkmale gelöst.

Durch die Gelenke, insbesondere kardanischen Gelenke, wird erreicht, daß das piezoelektrische Linearstellelement nur in Achsrichtung der Verschieberichtung belastet wird. Dies bedeutet, alle angreifenden Kräfte, außer den axial wirkenden, werden auf die Spindel ausgekoppelt. Der Lastangriff erfolgt immer zentral, und zwar auch dann, wenn z.B. die Stelleinrichtung für eine Platte vorgesehen ist. Damit werden Querkräfte auf das piezoelektrische Linearstellelement, durch die dieses zerstört werden könnte, sicher vermieden.

Vorteilhafte Ausgestaltungen und Weiterbildungen der Erfindung ergeben sich aus den Unteransprüchen und aus dem nachfolgend anhand der Zeichnung prinzipmäßig beschriebenen Ausführungsbeispiel.

### Es zeigt:

- Fig. 1: einen Längsschnitt durch die erfindungsgemäße Stellvorrichtung, welcher durch Querbohrungen, die ein kardanisches Gelenk bilden, geführt ist; und
- Fig. 2: eine vergrößerte dreidimensionale Ansicht der Stellvorrichtung nach Fig. 1.

Die nachfolgend beschriebene Stellvorrichtung ermöglicht neben einer Verstellung um mehrere Millimeter darüber hinaus eine exakte Positionierung im Bereich weniger Nanometer. Dies wird in Form einer kompakten Stelleinheit durch die Kombination einer Spindel 1 mit einem piezoelektrischen Linearstellelement, das wenigstens ein Piezoelement 2 aufweist, in Form einer kombinierten Grobeinstellung mit der Spindel 1 und einer Feinverfahrung durch Betätigung des Piezoelements 2 erreicht. Durch den Einsatz des Piezoelements 2 bleibt für die Stellvorrichtung eine hohe Traglast und hohe Steifigkeit der Spindel 1 erhalten.

Die Basis der Stelleinrichtung stellt eine Aufnahmebuchse 3 dar. In ihr ist eine Spindelmutter 4 der Spindel 1 festgespannt. Durch die Festsetzung der Spindelmutter 4 wird von der Spindel 1 selbst eine Grob-Verfahrung nach dem Prinzip eines Stößels erreicht.

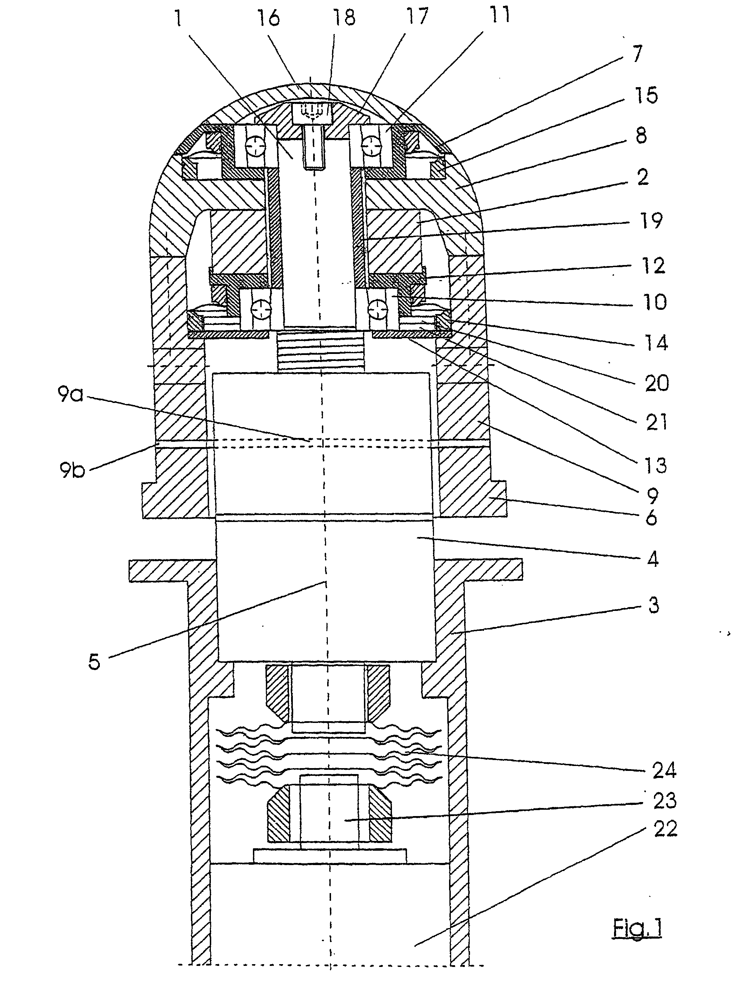

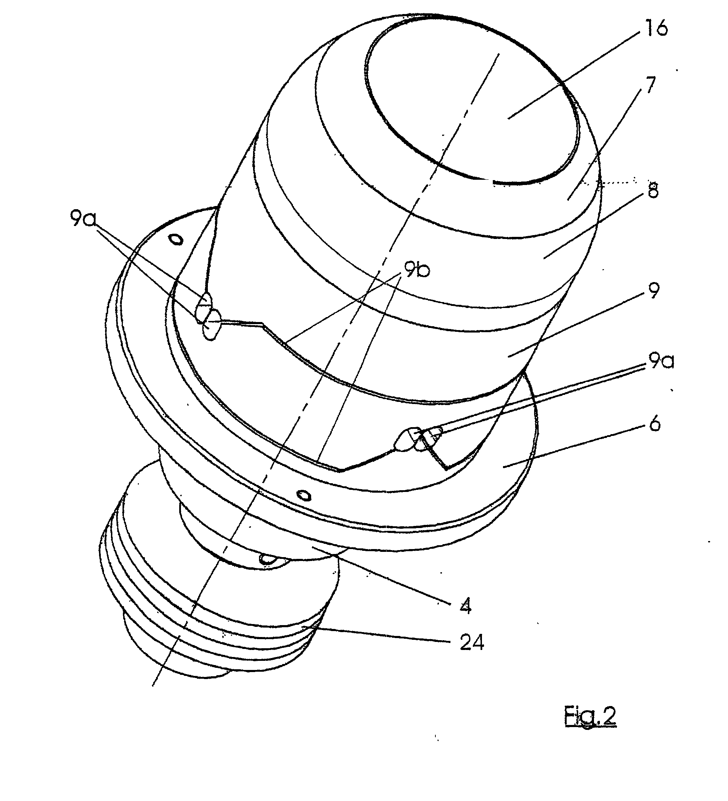

Der Bewegung der Spindel 1 wird axial mittels des Piezoelements 2 eine Fein-Verfahrung überlagert. Zu diesem Zweck ist das Piezoelement 2 in die Lastübertragungskette einbezogen, wobei sichergestellt ist, daß eine Lasteinleitung ausschließlich in axialer Richtung zur Piezoachse bzw. zu einer Längsachse 5 der Spindelachse erfolgt. Ein Ringabsatz 6 ist an einem kardanischen Gelenk vorgesehen, wobei eine über einen Aufnahmekranz bzw. Spannkranz 7 des kardanischen Gelenkes mit einem oberen Kardanteil 8 und einem damit verbundenen unteren Kardanteil 9 eingeleitete Traglast über das Piezoelement 2 und den Tragkranz 12 auf ein unteres Radiallager 10 und somit auf die Spindel 1 und die Aufnahmebuchse 3 übertragen wird. Das eigentliche kardanische Gelenk wird durch das untere Kardanteil 9 gebildet, wozu in dem Kardanteil 9 jeweils zwei nebeneinanderliegende durchgehende Querbohrungen 9a angeordnet sind, zwischen denen jeweils nur ein dünner Steg besteht. Aus der vergrößerten Darstellung von Fig. 2 sind zwei Bohrungssets 9a mit jeweils einem dünnen Steg dazwischen ersichtlich, die um 90° versetzt zueinander liegen und sich in der gleichen Ebene befinden. Die Lage des Schnittes nach der Fig. 1 verläuft genau zwischen den Bohrungen 9a in dem dünnen Steg.

Durch die Bohrungen 9a, an die sich Umfangsschlitze 9b anschließen, wird eine Art Kreuzgelenk gebildet, womit eine Bewegung des Kardanteils 9 im Raum zwischen dem über den Bohrungen 9a liegenden Bereich und dem unter den Bohrungen 9a liegenden Bereich geschaffen wird. Der Kreuzungspunkt der um 90° zueinander versetzten Bohrungsachsen bildet dabei den Schwenkpunkt. Grundsätzlich könnte das obere Kardanteil 8 mit dem Bereich des unteren Kardanteiles 9, das über den Bohrungen 9a liegt, einstückig sein, aus Montagegründen ist es jedoch zweiteilig und über eine Schraubverbindung mit dem unteren Kardanteil 9 verbunden.

Das Kardanteil 9 mit dem Ringansatz 6 an seinem unteren Ende dient als Objektaufnahme für ein - nicht dargestelltes - Objekt, welches entsprechend mit einem ringförmigen Aufnahmeteil versehen sein muß.

Die Spindel 1 ist weiterhin noch in einem oberen Radiallager 11 gelagert, dessen Außenring sich an dem Spannkranz 7 abstützt. Der Außenring des unteren Radiallagers 10 stützt sich an einem Tragkranz 12 ab, durch den die Lastübertragung einer Traglast auf das untere Radiallager 10 erfolgt. Zwischen dem unteren Radiallager 10 und dem unteren Kardanteil 9 ist eine Trägerplatte 13 angeordnet, wobei jedoch zwischen dem Radiallager 10 und der Trägerplatte 13 so viel Spiel vorhanden ist, daß Feinverstellungen durch eine Längung des Piezoelements 2 vorgenommen werden können. Die beiden Radiallager 10 und 11 dienen zur Rotationsauskoppelung der Spindel und zu deren Lagerung beim Feinverfahren. Ein koaxiales Festkörpergelenk 14 mit einer Federeinrichtung ist zwischen dem unteren Kardanteil 9 und dem Tragkranz 12 gespannt und bildet auf diese Weise zusammen mit dem Tragkranz 12 und dem axial über dem Piezoelement 2 angeordneten oberen Kardanteil 8 eine Vorspannung des Piezoelements 2 in axialer Richtung.

Zwischen dem oberen Kardanteil 8 und dem Spannkranz 7 ist ein weiteres koaxiales Festkörpergelenk 15 gespannt, das eine Vorspannung für die beiden Radiallager 10 und 11 bildet.

Eine Abdeckung 16 über dem Spannkranz 7 stellt einen Schutz vor Verunreinigungen für die rotierenden Bauteile dar.

Eine Krone 17, die auf die Spindel 1 aufgesetzt wird und die mit einer Spannschraube 18 stirnseitig mit der Spindel 1 verbunden wird, stellt über einen Ringabsatz an seinem Umfang ein Spannelement für das obere Radiallager 11 dar. Eine Distanzhülse 19 setzt die beiden Innenringe der Radiallager 10 und 11 fest.

Eine Bewegung des zu stellenden bzw. messenden Objektes, das auf den Ringabsatz (Objektaufnahme) 6 aufgesetzt ist gegenüber der Spindel 1, wird durch einen kapazitiven Sensor z.B. mit Sensorteilen 20 (Target) und 21 (Probe) gemessen, welche die Bewegung des Piezoelementes 2 feststellen. Hierzu ist das ruhende Element 20 des Sensors an der Unterseite des Tragkranzes 12 angebracht, welcher fest mit dem Piezoelement 2 verbunden ist. Das bewegliche Sensorelement 21 befindet sich auf der Trägerplatte 13, die fest mit dem unteren Kardanteil 9 verbunden ist. Die Feinverstellung wird somit durch Abstands- und damit Kapazi-tätsänderungen zwischen den Sensorteilen 20 und 21 gemessen. Die Messung der Feinbewegung wird somit nicht unmittelbar am Piezoelement 2 vorgenommen, sondern zwischen der Objektaufnahme 6 und der Spindel 1. Dies bedeutet, das Verhalten der zwischengeschalteten Bauteile fließt mit in die Messung ein und die reale Bewegung des zu stellenden Objektes gegenüber der Grob-Verfahrung wird detektiert.

Ein in der Aufnahmebuchse 3 angeordneter Elektromotor 22 stellt den Antrieb für die Spindel 1 dar. Da die Spindel 1 neben ihrer Rotation auch eine Linearbewegung für die Verfahrung ausführt, eine Antriebswelle 23 des Elektromotores 22 jedoch ortsfest ist, ist eine Kupplung 24 zwischen der Antriebswelle 23 und der Spindel 1 vorzusehen, damit dieser Weg ausgeglichen werden kann. Die Kupplung 24 kann auf verschiedene Weise ausgestaltet sein. In einfacher Weise kann sie als metallischer Faltenbalg ausgebildet sein, so daß trotz der notwendigen Drehsteifigkeit eine axiale Relativbewegung der Hubkompensation möglich ist.

Das piezoelektrische Linearstellelement mit dem Piezoelement 2 nimmt somit in Reihe mit der Spindel 1 die Verstellung vor. Bei Aktivierung des Piezoelements 2 dehnt sich dieses gemäß dem dargestellten Ausführungsbeispiel nach oben aus und hebt dabei das kardanische Gelenk mit den beiden Gelenkteilen 8 und 9 und damit auch das auf dem Ringabsatz 6 aufgelegte Objekt gegenüber der Spindel 1 an. Auf der Unterseite stützt sich das Piezoelement 2 über den Tragkranz 12 und das untere Radiallager 10 und damit auf der Spindel 1 ab.

Aufgrund des kardanischen Gelenkes mit den beiden Gelenkteilen 8 und 9, an dessen Ringabsatz 6 das Objekt angekoppelt wird, wird vermieden, daß kleine Kippungen des bewegten Objektes Biegemomente auf die Stellvorrichtung ausüben.

Durch die beiden koaxialen Festkörpergelenke 14 und 15 wird vermieden, daß Querkräfte auf das Piezoelement 2 ausgeübt werden; vielmehr werden diese sofort auf die Spindel 1 abgeleitet. Damit ist das Piezoelement 2 lediglich axial belastet.

Da das Piezoelement 2 durch das koaxiale Festkörpergelenk 14 vorgespannt ist, ist gewährleistet, daß grundsätzlich ein Kontakt zu den Anschlußflächen sichergestellt ist und daß neben Druck- auch Zugkräfte eingeleitet werden können. Über das auf den Ringabsatz bzw. die Objektaufnahme 6 aufgesetzte Objekt wird eine Last eingeleitet. Über das kardanische Gelenk mit den Gelenkteilen 8 und 9 geht diese Last zuerst in das Piezoelement 2 und von da aus auf den Tragkranz 12, das untere Lager 10 und dann über die Spindel 1 in die Spindelmutter 4 und damit in die Aufnahmebuchse 3.

Bei diesem Kraftweg muß jedoch sichergestellt sein, daß auch eine dynamische Belastung möglich ist, d.h. es muß sichergestellt werden, daß auf jeden Fall stets zwischen dem Kardanteil 8 und dem Piezoelement 2 ein Kontakt vorhanden ist, andernfalls wäre keine Feinverstellung möglich. Durch das untere Festkörpergelenk 14 wird hierzu eine Vorspannung geschaffen, welche gegen den Tragkranz 12 und gegen das Kardanteil 9 gedrückt wird. Zusätzlich ist dafür zu sorgen, daß die beiden Radiallager 10 und 11 spielfrei sind. Hierzu ist das obere Festkörpergelenk 15 vorgesehen, wodurch eine Vorspannung der beiden Radiallager gegenüber der Hülse 19 derart erreicht wird, daß die beiden Radiallager 10 und 11 mit ihren Außenringen auseinandergedrückt werden. Gleichzeitig ist damit auch sichergestellt, daß sich der obere Teil des Kardangelenkes gegenüber der Spindelachse nur koaxial bewegen kann.

Durch die Festsetzung des Innenringes des oberen Lagers 11 mittels der Krone 17 über die Distanzhülse 19 in den Innenring des unteren Lagers 10 entsteht eine statisch und dynamisch stabile Basis für die Rotationsbewegung zwischen Spindel 1 und Fein-Verstelleinheit durch das Piezoelement 2.

Diese für eine Spielfreiheit maßgebliche Lagerverspannung und die daraus resultierende Lagerbelastung kann durch konstruktive Maße bezüglich des koaxialen Festkörpergelenkes 15 festgelegt werden. Durch die Federvorspannung des Festkörpergelenkes 15 ist eine exakte und reproduzierbare Verspannung unter Berücksichtigung der tatsächlichen Lastwechsel, die durch das zu bewegende Objekt hervorgerufen wird, möglich.

Grundsätzlich ist die Stellvorrichtung mit dem kardanischen Gelenk und der Feinverfahrung bzw. Feinverstellung durch das Piezoelement 2 für jede Spindelausführung und unabhängig von dem groben Verfahrweg der Spindel 1 einsetzbar.

Selbstverständlich ist im Unterschied zu der stehenden Anordnung der Stellvorrichtung nach dem Ausführungsbeispiel auch eine hängende Anordnung möglich.

## Patentansprüche

1. Stellvorrichtung mit einem Getriebe, insbesondere einer Spindel (1) und einer damit zusammenarbeitenden Spindelmutter (4) zur Wandlung einer Rotations- in eine Linearbewegung für eine Grobverstellung und mit einem in Serie dazu angeordneten piezoelektrischen Linearstellelement (2) zur Feinverstellung, **dadurch gekennzeichnet, daß** das piezoelektrische Linearstellelement (2) durch ein Gelenk (8,9), insbesondere ein kardanisches, das zwischen einer Objektaufnahme (6) und der Spindel (1) angeordnet ist, von Querkräften und Momenten entlastet ist.

2. Stellvorrichtung nach Anspruch 1, **dadurch gekennzeichnet, daß** die Spindelmutter (4) drehfest gehalten ist und die Spindel (1) zusammen mit dem piezoelektrischen Linearstellelement (2) linear verschiebbar ist.

3. Stellvorrichtung nach Anspruch 2, **dadurch gekennzeichnet, daß** das piezoelektrische Linearstellelement (2) die Spindel (1) ringförmig umgibt.

4. Stellvorrichtung nach einem der Ansprüche 1, 2 oder 3, **dadurch gekennzeichnet, daß** das piezoelektrische Linearstellelement (2) durch mindestens ein Festkörpergelenk (14) vorgespannt ist.

5. Stellvorrichtung nach Anspruch 4, **dadurch gekennzeichnet, daß** die Vorspannung von dem Festkörpergelenk (14) einerseits über das kardanische Gelenk (8,9) und andererseits über einen Tragkranz (12) auf die aktiven Flächen des piezoelektrischen Linearstellelementes (2) verläuft.

6. Stellvorrichtung nach einem der Ansprüche 1 bis 5, **dadurch gekennzeichnet, daß** zur Messung der Bewegung des piezoelektrischen Linearstellelementes (2) wenigstens ein, vorzugsweise kapazitiver, Sensor (20,21) vorgesehen ist.

7. Stellvorrichtung nach Anspruch 6, **dadurch gekennzeichnet, daß** das ruhende Element des Sensors (20) an der Unterseite des Tragkranzes (12) und das bewegliche Element (21) auf einer Trägerplatte (13) angeordnet ist, welche fest mit einem unteren Gelenkteil (9) des kardanischen Gelenkes verbunden ist.

8. Stellvorrichtung nach einem der Ansprüche 1 bis 7, **dadurch gekennzeichnet, daß** die Spindel (1) zur Rotationsauskoppelung und zur Lagerung beim Feinverfahren in zwei Radiallagern (10,11) gelagert ist, wobei der Innenring eines oberen Lagers (11) über eine Distanzhülse (19) gegen den Innenring eines unteren Lagers (10) festgesetzt ist.

9. Stellvorrichtung nach Anspruch 8, **dadurch gekennzeichnet, daß** ein Außenring eines Radiallagers (10,11) durch mindestens ein Festkörpergelenk (15) vorgespannt sind.

10. Stellvorrichtung nach Anspruch 2 bis 9, **dadurch gekennzeichnet, daß** zwischen einer Antriebseinrichtung und der Spindel (1) eine Kupplung (24) für einen linearen Längenausgleich angeordnet ist.

11. Stellvorrichtung nach Anspruch 10, **dadurch gekennzeichnet, daß** die Kupplung einen drehsteifen Faltenbalg (24) aufweist.

## Claims

1. Actuator having a mechanism, in particular a spindle (1) and a spindle nut (4) that interacts therewith, for converting a rotational into a linear movement for coarse adjustment, and having a linear piezoelectric actuating element (2) arranged in series therewith for fine adjustment, **characterized in that** the linear piezoelectric actuating element (2) is relieved of transverse forces and torques by a joint (8,9), in particular a cardan joint, which is arranged between an object holder (6) and the spindle (1).

2. Actuator according to Claim 1, **characterized in that** the spindle nut (4) is held firmly against rotation, and the spindle (1) can be displaced linearly together with the linear piezoelectric actuating element (2).

3. Actuator according to Claim 2, **characterized in that** the linear piezoelectric actuating element (2) surrounds the spindle (1) annularly.

4. Actuator according to one of Claims 1, 2 or 3, **characterized in that** the linear piezoelectric actuating element (2) is prestressed by at least one solid-state joint (14).

5. Actuator according to Claim 4, **characterized in that** the prestress from the solid-state joint (14) extends on one side via the cardan joint (8, 9) and on the other side via a load-bearing ring (12) onto the active surfaces of the linear piezoelectric actuating element (2).

6. Actuator according to one of Claims 1 to 5, **characterized in that**, in order to measure the movement of the linear piezoelectric actuating element (2), at least one sensor (20, 21), preferably a capacitive sensor, is provided.

7. Actuator according to Claim 6, **characterized in that** the quiescent element of the sensor (20) is arranged on the underside of the load-bearing ring (12), and the movable element (21) is arranged on a carrier plate (17), which is firmly connected to a lower joint part (9) of the cardan joint.

8. Actuator according to one of Claims 1 to 7, **characterized in that** the spindle (1) is mounted in two radial bearings (10, 11) in order to couple out the rotation and for the purpose of mounting during fine movement, the inner ring of an upper bearing (11) being fixed against the inner ring of a lower bearing (10) via a spacer sleeve (19).

9. Actuator according to Claim 8, **characterized in that** an outer ring of a radial bearing (10, 11) is prestressed by at least one solid-state joint (15).

10. Actuator according to Claims 2 to 9, **characterized in that** a coupling (24) for linear length compensation is arranged between a drive device and the spindle (1).

11. Actuator according to Claim 10, **characterized in that** the coupling has a torsionally rigid bellows (24).

## Revendications

1. Dispositif de positionnement comprenant un mécanisme, en particulier une broche (1) et un écrou de broche (4) coopérant avec celle-ci pour convertir un mouvement de rotation en un mouvement linéaire pour un réglage grossier et comprenant un élément de positionnement linéaire (2) piézoélectrique disposé en série par rapport à celui-ci en vue d'un réglage fin, **caractérisé en ce que** l'élément de positionnement linéaire (2) piézoélectrique est déchargé des forces transversales et des couples par une articulation (8, 9), en particulier une articulation à cardan, qui est disposée entre un logement d'objet (6) et la broche (1).

2. Dispositif de positionnement selon la revendication 1, **caractérisé en ce que** l'écrou de broche (4) est maintenu fixe en rotation et la broche (1) peut être déplacée linéairement conjointement avec l'élément de positionnement linéaire (2) piézoélectrique.

3. Dispositif de positionnement selon la revendication 2, **caractérisé en ce que** l'élément de positionnement linéaire (2) piézoélectrique entoure annulairement la broche (1).

4. Dispositif de positionnement selon l'une quelconque des revendications 1, 2 ou 3, **caractérisé en ce que** l'élément de positionnement linéaire (2) piézoélectrique est précontraint par au moins une articulation solide (14).

5. Dispositif de positionnement selon la revendication 4, **caractérisé en ce que** la précontrainte de l'articulation solide (14) s'étend d'une part par le biais de l'articulation à cardan (8, 9) et d'autre part par le biais d'une couronne porteuse (12) sur les faces actives de l'élément de positionnement linéaire (2) piézoélectrique.

6. Dispositif de positionnement selon l'une quelconque des revendications 1 à 5, **caractérisé en ce que** pour la mesure du déplacement de l'élément de positionnement linéaire (2) piézoélectrique, on prévoit au moins un capteur (20, 21), de préférence capacitif.

7. Dispositif de positionnement selon la revendication 6, **caractérisé en ce que** l'élément statique du capteur (20) est disposé sur la face inférieure de la couronne porteuse (12) et l'élément mobile (21) est disposé sur une plaque porteuse (13) qui est connectée fermement à une partie d'articulation inférieure (9) de l'articulation à cardan.

8. Dispositif de positionnement selon l'une quelconque des revendications 1 à 7, **caractérisé en ce que** la broche (1) est montée en vue d'un désaccouplement en rotation et en vue d'un positionnement dans deux paliers radiaux (10, 11) lors du déplacement fin, la bague interne d'un palier supérieur (11) étant fixée par le biais d'une douille d'écartement (19) contre la bague interne d'un palier inférieur (10).

9. Dispositif de positionnement selon la revendication 8, **caractérisé en ce qu'**une bague extérieure d'un palier radial (10, 11) est précontrainte par au moins une articulation solide (15).

10. Dispositif de positionnement selon les revendications 2 à 9, **caractérisé en ce qu'**un accouplement (24) pour une compensation de longueur linéaire est prévu entre un dispositif d'entraînement et la broche (1).

11. Dispositif de positionnement selon la revendication 10, **caractérisé en ce que** l'accouplement présente un soufflet rigide en rotation (24).
